Europäisches Patentamt

European Patent Office

Office européen des brevets

(19)

(11) **EP 0 607 313 B1**

(12)

# FASCICULE DE BREVET EUROPEEN

(45) Date de publication et mention
de la délivrance du brevet:
**10.04.1996 Bulletin 1996/15**

(21) Numéro de dépôt: **92921928.5**

(22) Date de dépôt: **06.10.1992**

(51) Int Cl.6: **G05D 23/22**, H05B 3/70

(86) Numéro de dépôt international:
**PCT/FR92/00926**

(87) Numéro de publication internationale:
**WO 93/07550 (15.04.1993 Gazette 1993/10)**

(54) **SOLE CHAUFFANTE DESTINEE A ASSURER LE CHAUFFAGE D'UN OBJET DISPOSE A SA SURFACE ET REACTEUR DE TRAITEMENT CHIMIQUE MUNI DE LADITE SOLE**

Beheizter Fussboden zum Heizen eines darauf plazierten Körpers und chemischer Behandlungsreaktor mit diesem Boden

HEATING PLATE FOR HEATING AN OBJECT ON ITS SURFACE AND CHEMICAL TREATMENT REACTOR PROVIDED WITH SAID PLATE

(84) Etats contractants désignés:
**CH DE GB LI NL**

(30) Priorité: **07.10.1991 FR 9112315**

(43) Date de publication de la demande:
**27.07.1994 Bulletin 1994/30**

(73) Titulaire: **COMMISSARIAT A L'ENERGIE ATOMIQUE**
**F-75752 Paris Cedex 15 (FR)**

(72) Inventeurs:
• **ARENA, Chantal**
  **F-38120 Le Fontanil (FR)**
• **NOEL, Patrice**
  **F-38360 Sassenage (FR)**

(74) Mandataire: **Dubois-Chabert, Guy et al**
  **c/o BREVATOME**
  **25, rue de Ponthieu**
  **F-75008 Paris (FR)**

(56) Documents cités:
EP-A- 0 163 106          EP-A- 0 165 114
DE-A- 3 827 073          US-A- 3 134 006
US-A- 3 836 751          US-A- 4 886 954

## Description

"SOLE CHAUFFANTE DESTINEE A ASSURER LE CHAUFFAGE D'UN OBJET DISPOSE A SA SURFACE ET REACTEUR DE TRAITEMENT CHIMIQUE MUNI DE LADITE SOLE".

La présente invention concerne une sole chauffante destinée à assurer le chauffage d'un objet tel qu'un substrat, de préférence mince, disposé à sa surface ainsi qu'un réacteur de traitement chimique comprenant une telle sole.

Les réacteurs de traitement chimique permettent notamment de réaliser des dépôts de matières sur un substrat, par exemple par la technique connue sous le terme anglais de dépôt CVD, (c'est-à-dire dépôt chimique en phase vapeur). Ce substrat est généralement une plaquette de silicium utilisée dans la fabrication de composants électroniques.

Ce type de traitement chimique nécessite le chauffage du substrat à des températures comprises entre 20 et 1000°C.

Les réacteurs de traitement chimique présentent la possibilité de chauffer le substrat soit indirectement par des radiations émises par une source lumineuse telle que des lampes à halogène, (voir en particulier le réacteur de la Société Spectrum), soit directement par contact de ce substrat avec une sole chauffante, (voir en particulier le réacteur de la Société varian). Dans le cas où le substrat est déposé sur une sole chauffante, la distribution des températures au niveau du substrat correspond directement à la distribution des températures sur la sole.

Or, dans les réacteurs, ce substrat est parfois maintenu au contact de la sole par un anneau périphérique de clampage qui exerce une pression à la périphérie de ce substrat. Cet anneau étant généralement un bon conducteur thermique, il apparaît souvent localement une baisse de température du substrat.

Par ailleurs, dans les soles connues d'après l'art antérieur, la semelle métallique de celles-ci ne contient qu'une unique résistance chauffante disposée selon une distribution spatiale particulière, adaptée à son utilisation. Cette résistance chauffante étant parcourue par un courant unique, les seules variations possibles de température à la surface de la sole sont dues aux différences de répartition surfacique de la résistance chauffante dans la semelle. Il est donc difficile pour des raisons d'encombrement stérique de surchauffer une zone précise afin de rattraper une baisse locale de la température ou d'établir un gradient de température adapté au procédé de traitement désiré. On connaît, également, par le document US-A-3 134 006 un système de contrôle de température pour un élément chauffant qui comprend pour trois zones six thermistances qui constituent trois boucles de contrôle, à savoir une boucle principale dite boucle "maître" et deux boucles auxiliaires dites boucles "esclaves".

Le document EP-A-0 165 114 décrit un dispositif de régulation thermique pour soles à canaux chauds dans lequel chaque zone chauffante est associée à un thermocouple.

En conséquence, il serait souhaitable de réaliser une sole chauffante dont la température de surface puisse être ajustée plus précisément et dont les quantités de chaleur fournies par deux zones de surface de la sole puissent être différentes même si ces zones sont petites et contiguës.

A cet effet, l'invention concerne une sole chauffante destinée à assurer le chauffage d'un objet disposé à sa surface et à réaliser un profil de température préalablement choisi, cette sole comprenant une semelle réalisée dans un matériau ayant une bonne conductibilité thermique.

Selon les caractéristiques de l'invention, la semelle comprend n zones, à l'intérieur de chacune desquelles est disposé un élément conducteur d'électricité de longueur $L_n$, traversé par un courant d'intensité $I_n$ et destiné à assurer le chauffage de la zone de semelle correspondante, n+1 capteurs de mesure de la température de la surface de la semelle, ces capteurs de mesure étant disposés aux extrémités de chaque zone, n étant un nombre entier supérieur à 1, des moyens de traitement deux à deux des données fournies par les capteurs de mesure encadrant la zone à chauffer correspondante, des moyens de comparaison des valeurs fournies par les moyens de traitement avec au moins une valeur de référence et des moyens de régulation de l'intensité du courant $I_n$ circulant dans chaque élément conducteur d'électricité, ces moyens de régulation étant asservis aux moyens de comparaison.

Ainsi, grâce à l'invention, on peut diviser la surface de la sole chauffante en plusieurs zones à chauffer. Le nombre de zones sera déterminé en fonction de la précision du chauffage et/ou de la forme du profil de température que l'on souhaite obtenir. Deux capteurs de mesure de température sont associés à chaque zone à chauffer. Les valeurs mesurées par ces capteurs sont transmises aux moyens de traitement qui fournissent une valeur calculée. Celle-ci est ensuite comparée à une valeur de référence correspondant à la température souhaitée dans cette zone. Cette valeur de référence peut être la même pour toutes les zones ou différente. Lorsque cette valeur de référence est unique, le profil de température de la semelle est plat. Au contraire, lorsque les valeurs de référence sont différentes, on obtient un profil de température différent, par exemple une courbe croissante à partir du centre de la semelle. Par ailleurs, on voit que même pour maintenir un profil plat de température, compte-tenu des pertes thermiques locales, deux zones contiguës peuvent recevoir des quantités de chaleur différentes par l'intermédiaire des éléments conducteurs. En effet, ces éléments conducteurs peuvent avoir une répartition surfacique et une longueur $L_n$ différentes. Enfin, on peut également grâce aux moyens de régulation faire varier de façon différente l'intensité des cou-

rants $I_n$ traversant ces éléments conducteurs.

De préférence, la semelle est circulaire et les différentes zones de semelle sont annulaires et concentriques.

Dans la mesure où les objets traités tels que les substrats sont généralement circulaires puisqu'il s'agit le plus souvent de plaquettes de silicium, la forme circulaire de la semelle et les formes concentriques des zones de chauffage sont particulièrement bien adaptées à ce type d'application. Toutefois, il est bien évident que pour des objets de formes différentes on pourrait envisager d'autres formes de semelle ou de zones, sans pour autant sortir du cadre de l'invention.

De façon avantageuse, l'élément conducteur est disposé à l'intérieur de chaque zone selon une spirale. Cette disposition particulière est avantageuse car lorsque l'élément conducteur est particulièrement rigide, on évite les lignes coudées qui pourraient entraîner la rupture de cet élément.

De préférence, les capteurs de mesure de la température comprennent un thermocouple. En effet, celui-ci est aisément disponible sur le marché. Toutefois, on pourrait également envisager d'utiliser d'autres capteurs de mesure de la température tels que par exemple, des pyromètres optiques disposés à l'extérieur de la semelle.

De façon avantageuse, les moyens de traitement des données fournies par deux capteurs de mesure encadrant une zone à chauffer permettent de calculer la moyenne des deux températures fournies. Toutefois, on pourrait également envisager d'effectuer un autre calcul sur la base des deux températures fournies par les capteurs de mesure. Ce calcul dépend du profil de température voulu sur la semelle.

Enfin, les moyens de régulation comprennent n moyens d'alimentation variable en courant, chacun d'eux étant relié aux deux extrémités d'un des éléments conducteur d'électricité. Ces moyens sont faciles à mettre en oeuvre et peu coûteux. En fonction des écarts entre la valeur calculée et la valeur de référence, les moyens de régulation, asservis aux moyens de comparaison, réagissent en faisant varier l'intensité du courant aux bornes de chaque élément conducteur.

Enfin, l'invention concerne également un réacteur de traitement chimique d'un substrat comprenant la sole chauffante telle que celle qui vient d'être décrite, cette dernière étant destinée à recevoir sur sa surface ledit substrat.

L'invention sera mieux comprise à la lecture de la description suivante d'un mode préférentiel de réalisation donné à titre d'exemple illustratif et non limitatif, cette description étant faite en faisant référence aux dessins joints dans lesquels :

- la figure 1 illustre un schéma de principe de l'invention, la sole étant représentée en vue de dessus, et
- la figure 2 est une vue en coupe de la sole chauffante selon l'invention.

Pour plus de clarté dans la description, on prendra comme exemple d'objet disposé sur la sole chauffante, un substrat.

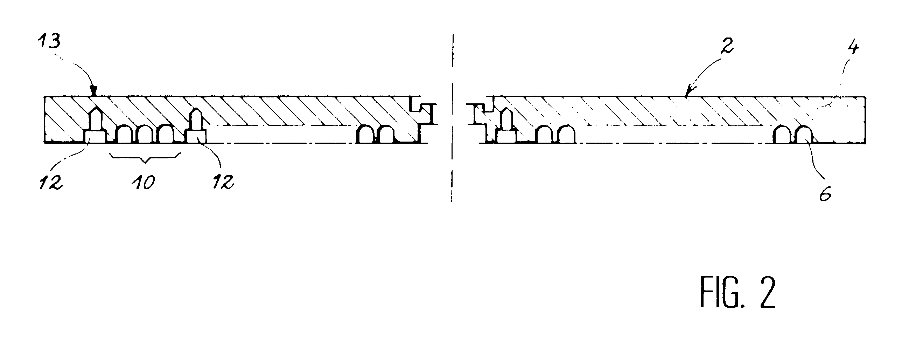

Comme illustrée en figure 2, la sole chauffante selon l'invention est destinée à assurer Le chauffage d'un substrat (non représenté disposé sur sa surface 2. La sole comprend une semelle 4 réalisée dans un matériau ayant une bonne conductibilité thermique. Ce matériau doit également avoir une bonne tenue mécanique compatible avec la température d'utilisation. A titre d'exemple, on peut utiliser certains métaux, le nitrure de bore ou le graphite.

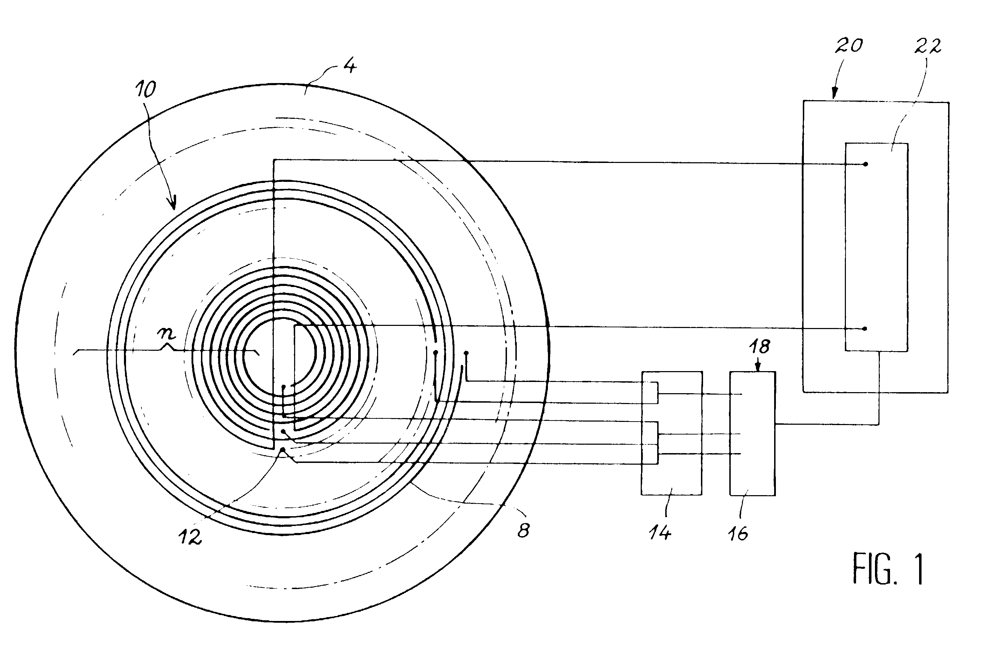

Cette semelle 4 présente intérieurement une gorge 6, de préférence continue, en forme de spirale plane, à l'intérieur de laquelle sont disposés et brasés n éléments conducteurs 8, n étant un nombre entier supérieur à 1. Ces éléments conducteurs 8 sont représentés uniquement schématiquement en figure 1.

Dans le mode de réalisation préféré de l'invention, la semelle 4 de la sole chauffante est circulaire, puisque le substrat traité l'est aussi. Les éléments conducteurs 8 sont donc de préférence disposés selon un enroulement en spirale suivant la gorge 6. Les n éléments conducteurs d'électricité 8 sont chacun d'une longueur $L_n$ variable. Chaque conducteur d'électricité 8 définit à la surface de la semelle 4 une zone correspondante 10. Plus précisément, chaque zone est définie par l'encombrement et l'enroulement d'un élément conducteur 8. En conséquence, en fonction de la longueur $L_n$ de l'élément conducteur et de sa répartition surfacique, la zone 10 sera plus ou moins large.

Les zones 10 sont annulaires et concentriques.

Par ailleurs, la sole chauffante comprend également n+1 capteurs de mesure 12 de la température. Ces capteurs 12 sont disposés de préférence, sensiblement au niveau de deux extrémités de chaque élément conducteur d'électricité 8. En d'autres termes, chaque capteur de mesure 12 est placé entre les extrémités de deux enroulements d'éléments 8 voisins. Ces capteurs sont de préférence des thermocouples. En conséquence, comme on peut le voir sur la figure 1, on peut également considérer qu'un thermocouple est disposé d'une part sur le rebord annulaire intérieur d'une zone 10 et que le thermocouple suivant est disposé sur le rebord extérieur de cette même zone. Ces thermocouples sont classiques et ne seront donc pas décrits plus en détail. Comme illustré en figure 2, ils permettent de relever la température en un point, référencé 13, situé sur la surface 2 de la semelle 4, au-dessus dudit thermocouple 12.

En outre, comme on peut le voir en figure 1, la sole chauffante selon l'invention comprend des moyens de traitement 14 des données fournies par les capteurs de mesure 12. Ces moyens de traitement 14 comprennent un calculateur permettant de traiter deux par deux, les données fournies par deux capteurs de mesure 12 situés aux deux extrémités d'une même zone 10. Les moyens de traitement 14 permettent, par exemple, de faire la moyenne des deux températures relevées des deux côtés de la zone 10 et d'en déduire la température moyenne régnant au niveau de la surface de la sole, dans cette zone. Les moyens de traitement 14 permettent également par exemple de calculer une fonction mathématique à partir des données fournies par les thermocouples. Il est ainsi possible de calculer une moyenne pondérée pour obtenir dans la zone 10 concernée le profil de température préalablement choisi. Il est également possible d'effectuer un calcul du type $\frac{\alpha T_1 + \beta T_2}{\gamma}$, dans lequel $T_1$ et $T_2$ représentent les valeurs de température de deux zones voisines et $\alpha$, $\beta$ et $\gamma$ des variables réelles ou des fonctions mathématiques, telles que la fonction log ou exponentielle, par exemple.

La sole comprend également des moyens de comparaison 16 reliés au moyen de traitement 14 des données et permettant de comparer la valeur fournie et calculée par les moyens de traitement 14 avec une valeur de référence 18 correspondant à la zone traitée. Enfin, les moyens de comparaison 16 sont reliés à des moyens de régulation de l'intensité du courant $I_n$ circulant dans chaque élément conducteur 8, ces moyens étant référencés de manière générale 20. Ces moyens de régulation 20 comprennent en fait n moyens d'alimentation variable en courant 22, dont un seulement a été représenté schématiquement en figure 1. Chaque moyen 22 est relié aux deux extrémités d'un élément conducteur 8.

L'invention permet de réaliser une sole où les températures de chauffage peuvent être ajustées, lors de sa fabrication, et/ou lors de son fonctionnement.

Lors de la fabrication, la longueur $L_n$ de chaque élément conducteur 8 peut être ajustée de façon à avoir une répartition surfacique correspondant à la quantité de chaleur que l'on souhaite obtenir dans une zone donnée. La longueur $L_n$ de chaque élément conducteur 8 est également conditionnée par les dimensions de la sole.

Lors du fonctionnement, les moyens d'alimentation 22 permettent de faire varier les intensités injectées dans les éléments conducteurs 8, ce qui a pour effet également de faire varier la température à la surface 2 correspondante de la semelle 4.

Enfin, le nombre de chaque élément conducteur 8 sera déterminé en fonction de la précision du profil de température demandé à la surface de la semelle 4.

Cette sole selon l'invention est plus particulièrement destinée à être utilisée dans un réacteur de traitement chimique, toutefois elle pourrait également être utilisée dans une autre application nécessitant le chauffage précis d'un objet, selon un profil de température préétabli.

**Revendications**

1. Sole chauffante destinée à assurer le chauffage d'un objet tel qu'un substrat disposé à sa surface (2) et à réaliser un profil de température préalablement choisi, cette sole comprenant une semelle (4) réalisée dans un matériau ayant une bonne conductibilité thermique, caractérisée en ce que la semelle (4) comprend n zones (10), à l'intérieur de chacune desquelles est disposé un élément conducteur d'électricité (8) de longueur ($L_n$) traversé par un courant d'intensité ($I_n$) et destiné à assurer le chauffage de la zone de semelle (10) correspondante, n+1 capteurs (12) de mesure de la température de la surface (2) de la semelle (4), ces capteurs de mesure (12) étant disposés aux extrémités de chaque zone (10), n étant un nombre entier supérieur à 1, des moyens de traitement deux à deux des données (14) fournies par les capteurs de mesure (12) encadrant la zone correspondante (10) à chauffer, des moyens de comparaison (16) des valeurs fournies par les moyens de traitement (14) avec au moins une valeur de référence (18) et des moyens de régulation (20) de l'intensité du courant ($I_n$) circulant dans chaque élément conducteur d'électricité (8), ces moyens de régulation (20) étant asservis aux moyens de comparaison (16).

2. Sole chauffante selon la revendication 1, caractérisée en ce que la semelle (4) est circulaire et en ce que les différentes zones (10) de semelle sont annulaires et concentriques.

3. Sole chauffante selon la revendication 1 ou 2, caractérisée en ce que l'élément conducteur (8) est disposé à l'intérieur de chaque zone (10) selon une spirale.

4. Sole chauffante selon la revendication 3, caractérisée en ce que la semelle (4) présente intérieurement une gorge (6) en forme de spirale à l'intérieur de laquelle sont brasés lesdits éléments conducteurs (8).

5. Sole chauffante selon la revendication 1, caractérisée en ce que les capteurs de mesure (12) de la température comprennent un thermocouple.

6. Sole chauffante selon la revendication 1, caractérisée en ce que les moyens de traitement (14) des données fournies par deux capteurs de mesure (12) encadrant une zone (10) à chauffer, permettent d'effectuer un calcul mathématique sur la base des deux températures fournies.

7. Sole chauffante selon la revendication 6, caractérisée en ce que les moyens de traitement (14) des données fournies par deux capteurs de mesure (12) encadrant une zone (10) à chauffer, permettent de calculer la moyenne des deux températures fournies.

8. Sole chauffante selon la revendication 1, caractérisée en ce que les moyens de régulation (20) comprennent n moyens d'alimentation variable en courant (22), chacun d'eux étant relié aux deux extrémités d'un élément conducteur d'électricité (8).

9. Réacteur de traitement chimique d'un substrat, caractérisé en ce qu'il comprend la sole chauffante selon l'une des revendications 1 à 8, cette sole étant destinée à recevoir sur sa surface (2) ledit substrat.

## Claims

1. Heating sole for heating an object such as a substrate placed on its surface (2) and implementing a previously chosen temperature profile, said sole incorporating a bed plate (4) made from a material having a good thermal conductivity, characterized in that the bed plate (4) comprises n zones (10), within each of which is placed an electricity conducting element (8) of length ($L_n$), traversed by a current of intensity ($I_n$) and intended for ensuring the heating of the corresponding bed plate zone (10), n+1 sensors (12) for measuring the temperature of the surface (2) of the bed plate (4), said measuring sensors (12) being positioned at the ends of each zone (10), n being an integer greater than 1, means (14) for the pairwise processing of data supplied by the measuring sensors (12) surrounding the corresponding zone (10) to be heated, means (16) for comparing the value supplied by the processing means (14) with at least one reference value (18) and means (20) for regulating the intensity of the current ($I_n$) flowing in each electricity conducting element (8), said regulating means (20) being dependent on the comparison means (16).

2. Heating sole according to claim 1, characterized in that the bed plate (4) is circular and in that the different bed plate zones (10) are annular and concentric.

3. Heating sole according to claim 1 or 2, characterized in that the conductor element (8) is positioned within each zone (10) in accordance with a spiral.

4. floating sole according to claim 3, characterized in that the bed plate (4) is internally provided with a spiral groove (6) within which are brazed the said conductor elements (8).

5. Heating sole according to claim 1, characterized in that the temperature measuring sensors (12) respectively comprise a thermocouple.

6. Heating sole according to claim 1, characterized in that the means (14) for processing the data supplied by the two measuring sensors (12) surrounding a zone (10) to be heated make it possible to calculate the mean value of the two temperatures supplied.

7. Heating sole according to claim 6, characterized in that the comparison means (16) compare the mean value of the temperatures with a reference temperature (18).

8. Heating sole according to claim 1, characterized in that the regulating means (20) incorporate n variable current supply means (22), each of them being connected to two ends of the electricity conducting element (8).

9. Reactor for the chemical treatment of a substrate, characterized in that it incorporates the heating sole according to any one of the claims 1 to 8, said sole receiving on its surface (2) the said substrate.

## Patentansprüche

1. Heizsohle, bestimmt zum Heizen eines auf ihrer Oberfläche (2) angeordneten Gegenstandes wie z.B. eines Substrats und zum Herstellen eines vorher gewählten Temperaturprofils, wobei diese Sohle eine Sohlplatte (4) umfaßt, hergestellt aus einem Material mit einer guten Wärmeleitfähigkeit, dadurch **gekennzeichnet,** daß die Sohlplatte (4) n Zonen (10) umfaßt, wobei im Innern von jeder von diesen Zonen ein elektrisch leitendes Element (8) der Länge ($L_n$) angeordnet ist, durchflossen von einem Strom der Starke ($I_n$) und dazu bestimmt, das Heizen der entsprechenden Sohlplattenzone (10) sicherzustellen, n+1 Meßfühler (12) der Temperatur der Oberfläche (2) der Sohlplatte (4), wobei diese Meßfühler (12) an den Enden von jeder Zone (10) angeordnet sind und n eine ganze Zahl großer als 1 ist, Einrichtungen (14) zur paarweisen Verarbeitung der Daten, geliefert durch die die entsprechende, zu heizende Zone (10) umrahmenden Meßfühler (12), Vergleichseinrichtungen (16) der durch die Verarbeitungseinrichtungen (14) gelieferten Werte mit wenigstens einem Bezugsert (18), und Regeleinrichtungen (20) für die Starke ($I_n$) des in jedem elektrisch leitenden Element (8) fließenden Stroms, wobei diese Regeleinrichtungen (20) von den Vergleichseinrichtungen (16) abhängig sind.

2. Heizsohle nach Anspruch 1, dadurch gekennzeichnet, daß die Sohlplatte (4) kreisförmig ist und dadurch, daß die verschiedenen Sohlplattenzonen 10 kreisförmig sind und konzentrisch.

3. Heizsohle nach Anspruch 1 oder 2, dadurch gekennzeichnet, daß das leitende Element (8) spiraförmig in jeder Zone angeordnet ist.

**4.** Heizsohle nach Anspruch 3, dadurch gekennzeichnet, daß die Sohlplatte (4) innen eine spiralförmige Hohlkehle (6) aufweist, in deren Innern die genannten leitenden Elemente verlötet sind.

**5.** Heizsohle nach Anspruch 1, dadurch gekennzeichnet, daß die Temperatur-Meßfühler (12) ein Thermoelement umfassen.

**6.** Heizsohle nach Anspruch 1, dadurch gekennzeichnet, daß die Verarbeitungseinrichtungen (14) der Daten, geliefert durch zwei eine zu heizende Zone (10) umrahmende Meßfuhler (12), die Durchfuhrung einer mathematischen Berechnung auf der Basis der beiden gelieferten Temperaturen ermöglichen.

**7.** Heizsohle nach Anspruch 6, dadurch gekennzeichnet, daß die Verarbeitungseinrichtungen (14) der Daten, geliefert durch zwei eine zu heizende Zone (10) umrahmende meßfühler (12), die Berechnung des Mittelwerts der beiden gelieferten Temperaturen ermöglichen.

**8.** Heizsohle nach Anspruch 1, dadurch gekennzeichnet, daß die Regeleinrichtungen (20) n variable Stromversorgungseinrichtungen (22) umfassen, wovon jede mit den beiden Enden eines elektrisch leitenden Elements (8) verbunden ist.

**9.** Chemischer Behandlungsreaktor eines Substrats, dadurch gekennzeichnet, daß er die Heizsohle nach einem der Ansprüche 1 bis 8 enthält, wobei diese Sohle dazu bestimmt ist, besagtes Substrat auf seiner Oberflache (2) aufzunehmen.

FIG. 1

EP 0 607 313 B1

FIG. 2